# EUROPEAN PATENT APPLICATION

(11) **EP 1 295 956 A2**
(43) Date of publication of application: **26.03.2003**
(21) Application number: 02021219.7
(22) Date of filing: 18.09.2002
(51) Int. Cl.: C22C 21/00, C22C 21/08, H01M 2/30, B21C 23/00

(54) **Aluminium alloy material for use in a terminal and terminal using the same**

(30) Priority: 25.09.2001 JP 2001292444
(71) Applicant: THE FURUKAWA ELECTRIC CO., LTD., Tokyo (JP)
(72) Inventor: Aida, Yukikatsu c/o The Furukawa Electric Co.,Ltd, Chiyoda-ku, Tokyo (JP); Ogawa, Kinya The Furukawa Electric Co.,Ltd.,, Chiyoda-ku, Tokyo (JP); Fujiwara, Hidemichi The Furukawa Electric Co.,Ltd, Chiyoda-ku, Tokyo (JP)
(74) Representative: Forstmeyer, Dietmar, Dr. rer. nat., Dipl.-Chem.

(57) **Abstract**

An aluminum alloy material for use in a terminal, which material contains a crystalline structure having 30% or more of a space factor of crystal grains having a crystal grain size of 30 µm or less. A terminal containing the aluminum alloy material.

## Description

### FIELD

The present invention relates to an aluminum alloy material for use in a terminal, and to a terminal using the aluminum alloy.

### BACKGROUND

Conventionally, copper or a copper alloy has been used for terminals of a battery cable and the like.

Use of aluminum for cables and terminals has been considered in recent years for making mobile appliances lightweight.

However, it was a problem that cracks are occurred at bent portions when an aluminum alloy rolled sheet is molded into a terminal.

### SUMMARY

The present invention is an aluminum alloy material for use in a terminal, which material comprises a crystalline structure having 30% or more of a space factor of crystal grains having a crystal grain size of 30 µm or less.

Further, the present invention is a terminal, which comprises the aluminum alloy material.

Other and further features and advantages of the invention will appear more fully from the following description, take in connection with the accompanying drawings.

### BRIEF DESCRIPTION OF DRAWINGS

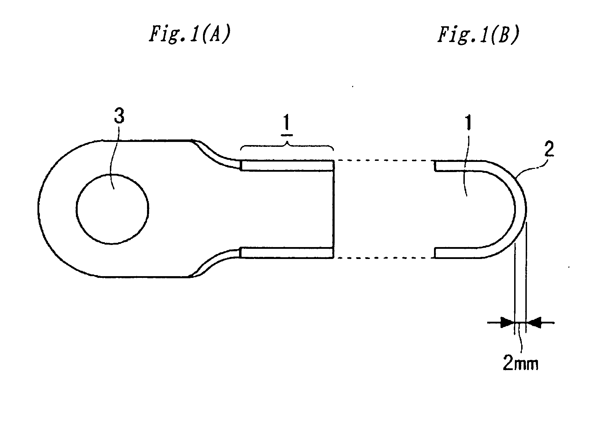

Figs. 1(A) and 1(B) illustrate a terminal used to investigate moldability into a terminal. Fig. 1(A) shows a front view of the terminal, and Fig. 1(B) shows an edge face (end) view at the right side of the terminal shown in Fig. 1(A).

### DETAILED DESCRIPTION

According to the present invention, the following means are provided:
(1) An aluminum alloy material for use in a terminal, comprising a crystalline structure having 30% or more of a space factor of crystal grains having a crystal grain size of 30 µm or less;
(2) The aluminum alloy material according to the item (1), wherein the aluminum alloy comprises 0.02 to 0.15% by mass of Zr, with the balance being Al and unavoidable impurities;
(3) The aluminum alloy material according to the item (1), wherein the aluminum alloy comprises 0.20 to 0.45% by mass of Zr, and at least one element selected from the group consisting of 0.01 to 0.05% by mass of Be, 0.10 to 0.30% by mass of Fe, 0.06 to 0.20% by mass of Si, and 0.10 to 0.30% by mass of Cu, with the balance being Al and unavoidable impurities;
(4) The aluminum alloy material according to the item (1), wherein the aluminum alloy comprises 0.35 to 1.5% by mass of Mg, 0.30 to 1.2% by mass of Si, at least one element selected from the group consisting of 0.10 to 1.00% by mass of Fe, 0.10 to 0.40% by mass of Cu, and 0.02 to 0.80% by mass of Mn, and at least one element selected from the group consisting of 0.02 to 0.40% by mass of Cr, 0.08 to 0.30% by mass of Zn, and 0.01 to 0.20% by mass of Ti, with the balance being Al and unavoidable impurities;
(5) The aluminum alloy material according to any one of the items (1) to (4), which is molded by a conform extrusion method; and
(6) A terminal, comprising the aluminum alloy material according to any one of the items (1) to (5).

Herein, the "space factor" means the ratio (%) of the volume occupied by crystal grains having a crystal grain size of 30 µm or less, of the total volume of the crystalline structure.

The inventors of the present invention, having studied an aluminum alloy material that occurs no cracks by molding into a terminal, have found that materials having a crystalline structure containing a higher proportion of crystal grains smaller in size (diameter) show better terminal moldability. The present invention has been completed through intensive studies thereafter.

The space factor of the crystal grains having a crystal grain size of 30 µm or less, in the crystalline structure, is defined to be 30% or more in the present invention. This is because cracks may be readily formed at the terminal bent portion, by molding into the terminal, when the space factor of the crystal grains having a crystal grain size of 30 µm or less, is less than 30%. There is no particular upper limit in the space factor of the crystal grains having a crystal grain size of 30 µm or less, but it is generally 80% or less.

While any electrically-conductive aluminum alloy may be used for the aluminum alloy material of the present invention, in particular, an Al-Zr alloy, an Al-Zr based alloy, and an Al-Mg-Si based alloy are preferable, since they are excellent in anti-stress relaxation properties with required electrical conductivity.

A conductor-holding force decreases by a temperature increase in use, to increase contact resistance between the terminal and conductor, when the aluminum alloy material to be used in the terminal has poor anti-stress relaxation properties. The anti-stress relaxation properties are enhanced in a highly heat-resistant alloy or high-strength alloy.

Zr is precipitated as an Al-Zr compound in the Al-Zr alloy according to the item (2), to enhance heat resistance, thereby improving the anti-stress relaxation properties. High electrical conductivity is maintained in this alloy by suppressing the content of Zr.

The content of Zr is defined to be 0.02 to 0.15% by mass in the Al-Zr alloy, because the effect of adding Zr cannot be sufficiently obtained when the content is less than 0.02% by mass, while high conductivity (57% IACS or more) cannot be maintained when the content exceeds 0.15% by mass.

The Al-Zr-based alloy according to the item (3) is an alloy, in which heat resistance is remarkably enhanced by increasing the content of Zr, and in which mechanical strength is enhanced by allowing at least one of Be, Fe, Si, and Cu to be contained in the alloy, thereby highly improving the anti-stress relaxation properties.

The content of Zr is defined within the range of 0.20 to 0.45% by mass in the Al-Zr-based alloy, because high anti-stress relaxation properties cannot be obtained when the content is less than 0.20% by mass, while conductivity (50% IACS or more) required for the terminal cannot be attained when the content exceeds 0.45% by mass, to decrease moldability into the terminal. In addition, Zr is so expensive that it is disadvantageous with respect to manufacturing cost. A particularly preferable content of Zr is in the range of 0.30 to 0.35% by mass.

In the Al-Zr-based alloy, beryllium (Be) forms a solid solution, to enhance mechanical strength, and accelerates precipitation of Zr, to enhance heat resistance. The content of Be is defined within the range of 0.01 to 0.05% by mass, because a content of less than 0.01% does not sufficiently give the effect of adding Be, while electrical conductivity decreases when the content exceeds 0.05% by mass. A particularly preferable content of Be is within the range of 0.02 to 0.04% by mass.

Fe enhances mechanical strength, by allowing Fe to precipitate as an Al-Fe compound. The content of Fe is defined within the range of 0.10 to 0.30% by mass, because the effect of adding Fe cannot be sufficiently obtained when the content is less than 0.10% by mass, while moldability into the terminal decreases when the content exceeds 0.30% by mass. A particularly preferable content of Fe is within the range of 0.15 to 0.20% by mass.

Si enhances mechanical strength, by forming a solid solution or precipitates, or it enhances mechanical strength by accelerating precipitation of a fine Al-Fe compound. The content of Si is defined to 0.06 to 0.20% by mass, because the effect of adding Si cannot be sufficiently obtained when the content is less than 0.06% by mass, while moldability of the material decreases when the content exceeds 0.20% by mass. A particularly preferable content of Si is within the range of 0.06 to 0.15% by mass.

Cu enhances mechanical strength, by forming a solid solution. The content of Cu is defined within the range of 0.10 to 0.30% by mass, because the effect of adding Cu cannot be sufficiently obtained when the content is less than 0.10% by mass, while moldability and electrical conductivity of the material are decreased when the content exceeds 0.30% by mass.

In the Al-Mg-Si based alloy according to the item (4), mechanical strength is enhanced by precipitating a Mg-Si compound between Mg and Si, and by forming a solid solution or precipitates among at least one of Fe, Cu, and Mn, and at least one of Cr, Zn, and Ti serve to enhance heat resistance, thereby improving the anti-stress relaxation properties of the alloy. Fe also has an effect to enhance heat resistance, while Mn also serves to enhance corrosion resistance.

The contents of Mg and Si are defined within the ranges of Mg 0.35 to 1.5% by mass, and Si 0.30 to 1.2% by mass, respectively, in this alloy, because the effect of adding these elements cannot be sufficiently obtained when the content of either of them is below the ranges described above, while cracks are occurred after casting, or moldability of the material decreases, when the content of either of them exceeds the ranges described above. Si also has an effect to enhance mechanical strength, by accelerating to precipitate a fine Al-Fe compound.

The contents of Fe, Cu, and Mn are defined in the ranges of Fe 0.10 to 1.00% by mass, Cu 0.10 to 0.40% by mass, and Mn 0.02 to 0.80% by mass, respectively, in this alloy, because the effect of adding these elements cannot be sufficiently obtained when the content of any one of these elements is below the ranges described above, while moldability of the material decreases when the content of any one of the elements exceeds the ranges as described above.

The contents of Cr, Zn, and Ti are defined within the range of Cr 0.02 to 0.40% by mass, Zn 0.08 to 0.30% by mass, and Ti 0.01 to 0.20% by mass, respectively, because the effects of adding these elements cannot be sufficiently obtained when the content of any one of them is below the ranges described above, while casting property decreases when the content of any one of them exceeds the ranges described above.

The aluminum alloy materials for use in a terminal according to the items (1) to (4) can be worked through conform extrusion, or cold-rolling after usual hot-extrusion or hot-rolling, into sheet materials. These sheet materials and the like can be molded into the terminal.

When a molten liquid aluminum alloy is cast into a billet by a semicontinuous casting method and the resulting billet is hot-rolled and then cold-rolled, to obtain a sheet material; or when a molten liquid aluminum alloy is cast into a plate ingot by a semicontinuous casting method and the resulting ingot is hot-rolled and then cold-rolled, into a sheet material, the crystal grain size can be controlled to fall within the prescribed range defined in the present invention, by adjusting the conditions of heat treatment(s) applied in the midway of cold-rolling. In this case, a crystal grain-fining agent, such as a Ti-B compound, can be used.

The heat treatment condition applied in the midway of cold-rolling is preferably at 350 to 500°C for 3 to 5 hours, and the crystal grain size may be simply controlled by selecting the heat treatment conditions.

Examples of the preferable production conditions that hardly cause cracks on the resulting sheet include hot extrusion at a preferable extrusion initiation temperature of 450 to 550°C, with a preferable extrusion ratio of 20 to 200; and hot-rolling at a preferable rolling initiation temperature of 350 to 550°C, with a preferable rolled reduction ratio of 30% or more at one rolling. The preferable cold-rolling initiation temperature is in the range from normal temperature to 120°C, with a preferable reduction ratio of 30% or more in one rolling.

Since conform extrusion can give the crystalline structure defined in the present invention (30% or more of the space factor of the crystal grains having a crystal grain size of 30 µm or less) after such an extrusion, no special controlling (adjustment) of the crystal grain size as described above is required, to achieve excellent productivity. In the case of conform extrusion, an extrusion temperature (the temperature of the extruded material at the outlet) that hardly cause cracks on the resulting sheet, is preferably 400 to 550°C, and particularly preferably 460 to 530°C.

The aluminum alloy material of the present invention is particularly suitable for a terminal for an automobile harness wire made of an aluminum alloy for flowing a large magnitude of electric current.

The aluminum alloy material of the present invention, for use in a terminal, is excellent in terminal formability, and it can give a high-quality terminal having no crack or the like with high yield, since the alloy comprises a crystalline structure having 30% or more of a space factor of the crystal grains having a crystal grain size of 30 µm or less. A terminal excellent in sustained electrical connection can be obtained, by using a highly conductive Al-Zr alloy, Al-Zr-based alloy, or Al-Mg-Si-based alloy having high anti-stress relaxation properties, as the aluminum alloy. Since the crystalline structure as defined in the present invention can be obtained by conform extrusion after such an extrusion process, no special adjustment of the crystal grain size is required, to achieve excellent productivity. Accordingly, the material of the present invention worked according to conform extrusion can afford excellent productivity by omitting treatment such as a heat treatment for adjusting the crystal grain size. Accordingly, the present invention exhibits remarkable effects in industrial applications.

The present invention will be described in more detail based on examples given below, but the present invention is not limited by these examples.

### Example

### (Example 1)

Molten liquids of aluminum alloys (Nos. A to E), having the compositions shown in Table 1, were prepared, respectively, by adding Zr to an aluminum ingot (JIS 1N90) for electric appliances. These molten liquids were processed into rough drawing wires of diameter 9.5 mm, by a belt-and-wheel-type continuous cast-rolling method. The resultant rough drawing wires were worked into a sheet material of thickness 2.0 mm and width 60 mm, by conform extrusion. The temperature of the sheet materials during extrusion was adjusted in the range of 480 to 510°C. Resultantly, the alloy materials according to the item (1) or (2) above were obtained.

### (Example 2)

The sheet materials of thickness 2.0 mm were produced in the same manner as in Example 1, except that the molten liquids of the aluminum alloys (Nos. F to O), having the compositions shown in Table 1, were provided, respectively. Resultantly, the alloy materials according to the item (1) or (3) above were obtained.

### (Example 3)

Sheet materials of thickness 2.0 mm were produced in the same manner as in Example 1, except that molten liquids of the aluminum alloys (Nos. P to T), having the compositions shown in Table 1, were provided, respectively. Resultantly, the alloy materials according to the item (1) or (4) above were obtained.

### (Comparative Example 1)

The molten liquids of the Nos. A, F, K, P, and S aluminum alloys, having the compositions as shown in Table 1, were cast into plate ingots by a semicontinuous casting method. The resulting ingots were hot-rolled and then cold-rolled, into sheet materials of thickness 2.0 mm. The crystal grain size of the resulting sheet materials was adjusted to fall outside the range defined in the present invention, by applying two separate heat treatments in the midway of cold-rolling and the conditions in the heat treatment ware properly controlled.

Each sheet material produced in Examples 1 to 3 and Comparative Example 1 was molded into a terminal of the shape as shown in Figs. 1(A) and 1(B), to investigate moldability into the terminal.

In Figs. 1(A) and 1(B), the reference numeral 1 denotes a conductor-holding part, the reference numeral 2 denotes a bent portion, and the reference numeral 3 denotes a bolt through-hole. This terminal corresponds to an automobile battery electrode terminal (part mark BA, with a nominal number 508), as defined in JIS D 5403 1989.

Moldability into terminal was investigated by the incidence (number) of cracks of the bent portion 2, with respect to 10 terminals obtained. The results were evaluated as good in moldability into terminal when no terminal had cracks, and as poor when at least one terminal had cracks. The results are shown in Tables 2 and 3 as the resulting number of cracks.

The space factor of the crystal grains having a crystal grain size of 30 µm or less is also listed in Tables 2 and 3.

The crystal grain size was measured according to JIS H 0501 (cut method), and the space factor of the crystal grains having a crystal grain size of 30 µm or less was determined based on the measured results. The measured surface was ground into a specular surface by a buff, followed by removing the surface layer to a depth of several micrometers, by electropolishing.

**Table 1**

| Alloy No. | Zr mass % | Mg mass % | Si mass % | Be mass % | Fe mass % | Cu mass % | Mn mass % | Cr mass % | Zn mass % | Ti mass % |
|---|---|---|---|---|---|---|---|---|---|---|
| A | 0.08 | - | - | - | - | - | - | - | - | - |
| B | 0.03 | - | - | - | - | - | - | - | - | - |
| C | 0.13 | - | - | - | - | - | - | - | - | - |
| D | 0.02 | - | - | - | - | - | - | - | - | - |
| E | 0.15 | - | - | - | - | - | - | - | - | - |
| F | 0.32 | - | 0.10 | - | 0.15 | - | - | - | - | - |
| G | 0.40 | - | 0.12 | 0.05 | 0.18 | - | - - | - | - | - |
| H | 0.20 | - | - | 0.02 | - | - | - | - | - | - |
| I | 0.36 | - | 0.15 | 0.04 | 0.19 | - | - | - | - | - |
| J | 0.24 | - | - | 0.02 | 0.10 | - | - | - | - | - |
| K | 0.32 | - | 0.10 | 0.03 | 0.28 | 0.20 | - | - | - | - |
| L | 0.25 | - | 0.06 | 0.02 | 0.15 | 0.11 | - | - | - | - |
| M | 0.45 | - | 0.19 | 0.05 | 0.30 | 0.30 | - | - | - | - |
| N | 0.29 | - | 0.08 | 0.02 | 0.21 | 0.14 | - | - | - | - |
| O | 0.37 | - | 0.14 | 0.04 | 0.24 | 0.24 | - | - | - | - |
| P | - | 0.35 | 0.30 | - | 0.50 | 0.10 | 0.03 | 0.03 | 0.10 | 0.01 |
| Q | - | 0.78 | 0.70 | - | 0.48 | 0.11 | 0.02 | 0.02 | 0.09 | 0.01 |
| R | - | 0.48 | 1.20 | - | 0.35 | 0.10 | 0.10 | 0.09 | 0.11 | 0.10 |
| S | - | 0.88 | 0.60 | - | 0.35 | 0.12 | 0.11 | 0.10 | 0.09 | 0.09 |
| T | - | 0.80 | 0.45 | - | 0.70 | 0.15 | 0.15 | 0.05 | 0.25 | 0.15 |
| Note: The balance was Al and unavoidable impurities. | | | | | | | | | | |

**Table 2**

| Classification | Sample No. | Alloy No. | Producing method | Adjustment method of crystal grains | Space factor % of crystal grains of 30 µm or less* | Number of cracks |
|---|---|---|---|---|---|---|
| Example 1 | 1 | A | Conform extrusion | No adjustment | 35 | 0 |
| | 2 | B | | | 33 | 0 |
| | 3 | C | | | 38 | 0 |
| | 4 | D | | | 31 | 0 |
| | 5 | E | | | 36 | 0 |
| Example 2 | 6 | F | Conform extrusion | No adjustment | 33 | 0 |
| | 7 | G | | | 36 | 0 |
| | 8 | H | | | 30 | 0 |
| | 9 | I | | | 36 | 0 |
| | 10 | J | | | 36 | 0 |
| | 11 | K | | | 37 | 0 |
| | 12 | L | | | 34 | 0 |
| | 13 | M | | | 34 | 0 |
| | 14 | N | | | 31 | 0 |
| | 15 | O | | | 41 | 0 |
| Example 3 | 16 | P | Conform extrusion | No adjustment | 41 | 0 |
| | 17 | Q | | | 31 | 0 |
| | 18 | R | | | 37 | 0 |
| | 19 | S | | | 34 | 0 |
| | 20 | T | | | 34 | 0 |

| | | | | | | |
|---|---|---|---|---|---|---|
| Note: * Space factor (%) of crystal grains having a grain diameter of 30 µm or less | | | | | | |

**Table 3**

| Classification | Sample No. | Alloy No. | Producing method | Adjustment method of crystal grains | Space factor % of crystal grains of 30 µm or less* | Number of cracks |
|---|---|---|---|---|---|---|
| Comparative Example 1 | 21 | A | Hot-rolling → Cold-rolling | Two heat treatments | 27 | 2 |
| | 22 | F | | | 12 | 5 |
| | 23 | K | | | 24 | 3 |
| | 24 | P | | | 14 | 5 |
| | 25 | S | | | 22 | 4 |

| | | | | | | |
|---|---|---|---|---|---|---|
| Note: * Space factor (%) of crystal grains having a grain diameter of 30 µm or less | | | | | | |

As is apparent from the results shown in Tables 2 and 3, the aluminum alloy material samples Nos. 1 to 20, of the Examples according to the present invention, were excellent in moldability into terminal, with no terminal had cracks thereon, since the samples each had 30% or more of the space factor of the crystal grains having a crystal grain size of 30 µm or less. The samples were prepared by conform extrusion and they were excellent in productivity, since no heat-treatment or the like was required to adjust the crystal grain size. Therefore, the overall evaluation was very good.

In contrast, the samples for comparison Nos. 21 to 25, in Comparative Example 1, were poor in moldability into terminal, due to less than 30% of the space factor of the crystal grains having a crystal grain size of 30 µm or less, with cracks occurred at the bent portion of the terminal.

The anti-stress relaxation properties and electric conductivity, which were required for a terminal, were also measured with respect to the terminals of the present invention.

A cable conductor made of an aluminum alloy was fixed by compression on the conductor-holding part of the terminal, the resulting terminal and the cable were heated at 200°C for 40 hours, and electrical resistance (r) between the terminal and the cable after heating was measured. The anti-stress relaxation properties were evaluated by obtaining the ratio (r/R) between the electrical resistance (R) before heating the terminal and the cable and the electrical resistance (r) after heating. All the samples Nos. 1 to 20 of the examples according to the present invention showed good characteristics with the ratio (r/R) of 0.9 or more, showing that the samples Nos. 1 to 20 had high heat-resistance or mechanical strength. Electrical conductivity also satisfied a level of 50% IACS or more required for a terminal (as measured in accordance with JIS H 0505).

Similarly, no crack or the like was occurred when the aluminum alloy material of the present invention was molded into terminals of other configurations (nominal Nos. 608 and 708), with good moldability.

Having described our invention as related to the present embodiments, it is our intention that the invention not be limited by any of the details of the description, unless otherwise specified, but rather be construed broadly within its spirit and scope as set out in the accompanying claims.

## Claims

1. An aluminum alloy material for use in a terminal, comprising a crystalline structure having 30% or more of a space factor of crystal grains having a crystal grain size of 30 µm or less.

2. The aluminum alloy material according to Claim 1, wherein the aluminum alloy comprises 0.02 to 0.15% by mass of Zr, with the balance being Al and unavoidable impurities.

3. The aluminum alloy material according to Claim 1, wherein the aluminum alloy comprises 0.20 to 0.45% by mass of Zr, and at least one element selected from the group consisting of 0.01 to 0.05% by mass of Be, 0.10 to 0.30% by mass of Fe, 0.06 to 0.20% by mass of Si, and 0.10 to 0.30% by mass of Cu, with the balance being Al and unavoidable impurities.

4. The aluminum alloy material according to Claim 1, wherein the aluminum alloy comprises 0.35 to 1.5% by mass of Mg, 0.30 to 1.2% by mass of Si, at least one element selected from the group consisting of 0.10 to 1.00% by mass of Fe, 0.10 to 0.40% by mass of Cu, and 0.02 to 0.80% by mass of Mn, and at least one element selected from the group consisting of 0.02 to 0.40% by mass of Cr, 0.08 to 0.30% by mass of Zn, and 0.01 to 0.20% by mass of Ti, with the balance being Al and unavoidable impurities.

5. The aluminum alloy material according to any one of Claims 1 to 4, which is molded by conform extrusion.

6. A terminal, comprising the aluminum alloy material according to any one of Claims 1 to 4.

7. The terminal according to Claim 6, wherein the aluminum alloy material is molded by conform extrusion.
